# FASCICULE DE BREVET EUROPEEN

(11) **EP 4 065 530 B1**
(45) Date de publication et mention de la délivrance du brevet: **13.11.2024**
(21) Numéro de dépôt: 20811392.8
(22) Date de dépôt: 27.11.2020
(51) Int. Cl.: C03C 17/36

(54) **MATERIAU COMPORTANT UN EMPILEMENT A SOUS-COUCHE DIELECTRIQUE FINE D'OXIDE A BASE DE ZINC ET PROCEDE DE DEPOT DE CE MATERIAU**
MATERIAL MIT EINEM STAPEL MIT EINER DÜNNEN DIELEKTRISCHEN OXIDUNTERSCHICHT AUF ZINKBASIS UND VERFAHREN ZUM AUFBRINGEN DIESES MATERIALS
MATERIAL COMPRISING A STACK WITH A THIN ZINC-BASED OXIDE DIELECTRIC SUBLAYER AND METHOD FOR APPLYING THIS MATERIAL

(30) Priorité: 29.11.2019 FR 1913465
(43) Date de publication de la demande: 05.10.2022
(73) Titulaire: Saint-Gobain Glass France, 92400 Courbevoie (FR)
(72) Inventeur: BARRES, Thomas, 92600 ASNIERES SUR SEINE (FR); GUIMARD, Denis, 75013 PARIS (FR); ORVEN, Matthieu, 92230 GENNEVILLIERS (FR)
(74) Mandataire: Saint-Gobain Recherche
(86) Numéro de dépôt international: PCT/EP2020/083647
(87) Numéro de publication internationale: WO 2021/105374

(56) Documents cités:
- FR-A1- 2 818 272
- FR-A1- 2 874 607
- FR-A1- 2 936 510
- FR-A1- 3 005 048
- FR-A1- 3 054 892

## Description

L'invention concerne un matériau comprenant un substrat verrier revêtu sur une face d'un empilement de couches minces à propriétés de réflexion dans l'infrarouge et/ou dans le rayonnement solaire comportant au moins une couche fonctionnelle métallique, en particulier à base d'argent ou d'alliage métallique contenant de l'argent et au moins deux revêtements antireflet, lesdits revêtements antireflet comportant chacun au moins une couche diélectrique, ladite couche fonctionnelle étant disposée entre les deux revêtements antireflet.

Dans ce type d'empilement, l'unique, ou chaque, couche fonctionnelle métallique se trouve ainsi disposée entre deux revêtements antireflet comportant chacun en général plusieurs couches qui sont chacune en un matériau diélectrique du type nitrure, et notamment nitrure de silicium ou d'aluminium, ou oxyde. Du point de vu optique, le but de ces revêtements qui encadrent la ou chaque couche fonctionnelle métallique est « d'antirefléter » cette couche fonctionnelle métallique.

Il est connu de la demande de brevet européen N° EP 718 250 une configuration antérieure dans laquelle d'une part une couche à base d'oxyde de zinc est située juste sous et au contact de la couche fonctionnelle métallique, en direction du substrat, puis une couche à base de nitrure de silicium sous et au contact cette couche à base d'oxyde de zinc et dans laquelle d'autre part une couche à base d'oxyde de zinc est située au-dessus, à l'opposé du substrat, puis une couche diélectrique, par exemple à base de nitrure de silicium, est située sur et au contact de cette couche à base d'oxyde de zinc.

Ce document enseigne en particulier que le matériau comprenant cet empilement de couches minces et le substrat sur une face duquel il est situé peut subir un traitement thermique sollicitant, du type bombage, trempe ou recuit, qui conduit à une modification structurelle du substrat sans dégrader les propriétés optiques et thermiques de l'empilement.

Il est connu de la demande internationale de brevet N° WO 2018/024985 une configuration d'empilement monocouche fonctionnelle présentant sous cette couche fonctionnelle, en partant du substrat, une sous-couche diélectrique primaire de nitrure à base de silicium Si₃N₄ ou à base de silicium-zirconium présentant un rapport atomique particulier de Zr sur la somme de (Si + Zr), puis une sous-couche d'oxyde à base de zinc ZnO qui est située sous et au contact de ladite couche fonctionnelle, puis la couche fonctionnelle métallique, puis une couche de sur-blocage métallique en NiCr, puis un revêtement diélectrique. La demande internationale de brevet N° WO 2014/177798 divulgue une configuration d'empilement bicouche fonctionnelle avec une couche de sur-blocage métallique située juste au-dessus et au contact de chaque couche fonctionnelle métallique.

Il est connu par ailleurs de la demande internationale de brevet N° WO 2010/142926 d'appliquer un traitement par rayonnement après le dépôt d'un empilement comportant une couche fonctionnelle pour diminuer l'émissivité ou améliorer les propriétés optiques de cet empilement, en prévoyant en particulier une couche absorbante en couche terminale de l'empilement. L'utilisation d'une couche terminale absorbante permet d'accroitre l'absorption du rayonnement par l'empilement et de diminuer la puissance nécessaire au traitement. Comme la couche terminale s'oxyde lors du traitement et devient transparente, les caractéristiques optiques de l'empilement après traitement sont intéressantes (une transmission lumineuse élevée peut notamment être obtenue).

A la différence du traitement thermique évoqué précédemment, ce traitement par rayonnement de l'empilement ne modifie pas structurellement le substrat.

L'invention repose sur la découverte d'une configuration particulière de couches encadrant une couche fonctionnelle métallique qui permet de diminuer la résistance par carré à épaisseur de couche fonctionnelle identique, voire de diminuer l'épaisseur de couche fonctionnelle pour obtenir des propriétés thermiques améliorées, et cela après un traitement thermique du matériau ou un traitement par rayonnement de l'empilement selon les techniques connues.

Un but de l'invention est ainsi de parvenir à mettre au point un nouveau type d'empilement de couches à une ou plusieurs couches fonctionnelles, empilement qui présente, après traitement thermique du matériau ou traitement de l'empilement par un rayonnement, une faible résistance par carré (et donc une faible émissivité), une transmission lumineuse élevée, ainsi qu'une homogénéité d'aspect, tant en transmission qu'en réflexion.

Dans la configuration particulière selon l'invention, il est proposé d'une part de disposer une couche très fine d'oxyde à base de zinc juste sous et au contact de la couche fonctionnelle métallique, en direction du substrat, puis de disposer, en direction du substrat une couche à base de nitrure de silicium sous et au contact de cette couche très fine d'oxyde à base de zinc et d'autre part de disposer une couche fine d'oxyde à base de zinc juste au-dessus et au contact de la couche fonctionnelle métallique, à l'opposé du substrat, puis de disposer une couche diélectrique, par exemple de nitrure à base de silicium, sur (au contact ou non) cette couche fine d'oxyde à base de zinc.

L'invention a ainsi pour objet, dans son acception la plus large, un matériau selon la revendication 1. Ce matériau comprend un substrat verrier revêtu sur une face d'un empilement de couches minces à propriétés de réflexion dans l'infrarouge et/ou dans le rayonnement solaire comportant au moins une couche fonctionnelle métallique, en particulier à base d'argent ou d'alliage métallique contenant de l'argent et au moins deux revêtements antireflet, lesdits revêtements antireflet comportant chacun au moins une couche diélectrique, ladite couche fonctionnelle étant disposée entre les deux revêtements antireflet, ledit matériau étant remarquable :
- d'une part en ce que ledit revêtement antireflet situé sous ladite couche fonctionnelle en direction dudit substrat comporte :
   - une sous-couche d'oxyde à base de zinc, ZnO, qui est située sous et au contact de ladite couche fonctionnelle, avec une épaisseur physique de ladite sous-couche d'oxyde à base de zinc ZnO qui est comprise entre 0,3 et 5,0 nm, voire entre 0,3 et 4,4 nm, voire entre 0,3 et 2,9 nm, voire entre 0,5 et 2,4 nm, voire entre 1,0 et 3,0 nm, voire entre 1,5 et 2,4 nm ; et
   - une sous-couche diélectrique de nitrure à base de silicium, Si₃N₄, qui est située sous et au contact de ladite sous-couche d'oxyde à base de zinc ZnO, avec une épaisseur physique de ladite sous-couche de nitrure à base de silicium Si₃N₄ qui est comprise entre 10,0 et 50,0 nm, voire entre 22,0 et 45,0 nm, voire entre 35,0 et 45,0 nm ;
- d'autre part en ce que ledit revêtement antireflet situé au-dessus ladite couche fonctionnelle à l'opposé dudit substrat comporte :
   - une surcouche d'oxyde à base de zinc, ZnO, qui est située sur et au contact de ladite couche fonctionnelle, avec une épaisseur physique de ladite surcouche d'oxyde à base de zinc ZnO qui est comprise entre 2,0 et 10,0 nm, voire entre 2,0 et 8,0 nm, voire entre 2,5 et 5,4 nm ; et
   - une surcouche diélectrique qui est située sur ladite surcouche d'oxyde à base de zinc ZnO, et de préférence une surcouche diélectrique de nitrure à base de silicium ,Si₃N₄.

Ladite sous-couche d'oxyde à base de zinc est la couche très fine évoquée précédemment : elle présente une épaisseur correspondant au minium à une couche mono-moléculaire de Zn₁O₁ et une épaisseur maximum de quelques nanomètres seulement. Dans cette couche, de préférence, l'oxyde de zinc est ni sous-stœchiométrique, ni sur-stoechiométrique, afin de présenter un coefficient d'absorption le plus bas possible dans le domaine du visible.

Ladite sous-couche diélectrique de nitrure à base de silicium est une couche barrière qui empêche la pénétration d'éléments provenant du substrat en direction de la couche fonctionnelle métallique lors du traitement.

Ledit empilement peut comporter une seule couche fonctionnelle métallique ou peut comporter deux couches fonctionnelles métalliques, ou trois couches fonctionnelles métalliques, ou quatre couches fonctionnelles métalliques ; les couches fonctionnelles métalliques dont il s'agit ici sont des couches continues.

De préférence, lorsque l'empilement comporte plusieurs couches fonctionnelles métalliques, chaque couche fonctionnelle est selon l'indication précédente, avec :
- d'une part ledit revêtement antireflet situé sous et au contact de chaque couche fonctionnelle qui comporte, en direction dudit substrat :
   - une sous-couche d'oxyde à base de zinc, ZnO, qui est située sous et au contact de ladite couche fonctionnelle, avec une épaisseur physique de ladite sous-couche d'oxyde à base de zinc ZnO qui est comprise entre 0,3 et 5,0 nm, voire entre 0,3 et 4,4 nm, voire entre 1,0 et 3,0 nm, voire entre 1,5 et 2,4 nm ; et
   - une sous-couche diélectrique de nitrure à base de silicium, Si₃N₄, qui est située sous et au contact de ladite sous-couche d'oxyde à base de zinc ZnO, avec une épaisseur physique de ladite sous-couche de nitrure à base de silicium Si₃N₄ qui est comprise entre 10,0 et 50,0 nm, voire entre 22,0 et 45,0 nm, voire entre 35,0 et 45,0 nm ;
- d'autre part ledit revêtement antireflet situé au-dessus et au contact de chaque couche fonctionnelle qui comporte à l'opposé dudit substrat :
   - une surcouche d'oxyde à base de zinc, ZnO, qui est située sur et au contact de ladite couche fonctionnelle, avec une épaisseur physique de ladite surcouche d'oxyde à base de zinc ZnO qui est comprise entre 2,0 et 10,0 nm, voire entre 2,0 et 8,0 nm, voire entre 2,5 et 5,4 nm ; et
   - une surcouche diélectrique qui est située sur ladite surcouche d'oxyde à base de zinc ZnO, et de préférence une surcouche diélectrique de nitrure à base de silicium ,Si₃N₄.

Ladite couche fonctionnelle métallique, ou chaque fonctionnelle métallique, présente de préférence une épaisseur physique qui est comprise entre 8,0 et 22,0 nm, voire entre 9,0 et 16,0 nm, voire entre 9,5 et 12,4 nm.

Une couche fonctionnelle métallique comporte, de préférence, majoritairement, à au moins 50 % en pourcentage atomique, au moins un des métaux choisi dans la liste : Ag, Au, Cu, Pt ; une, plusieurs, ou chaque, couche fonctionnelle métallique est de préférence en argent.

Par « couche métallique » au sens de la présente invention, il faut comprendre que la couche ne comporte pas d'oxygène, ni d'azote.

Comme habituellement, par « couche diélectrique » au sens de la présente invention, il faut comprendre que du point de vue de sa nature, la couche est « non métallique », c'est-à-dire qu'elle comporte de l'oxygène ou de l'azote, voire les deux. Dans le contexte de l'invention, ce terme signifie que le matériau de cette couche présente un rapport n/k sur toute la plage de longueur d'onde du visible (de 380 nm à 780 nm) égal ou supérieur à 5.

Il est rappelé que n désigne l'indice de réfraction réel du matériau à une longueur d'onde donnée et le coefficient k représente la partie imaginaire de l'indice de réfraction à une longueur d'onde donnée, ou coefficient d'absorption ; le rapport n/k étant calculé à une longueur d'onde donnée identique pour n et pour k.

Par ≪ au contact >> on entend au sens de l'invention qu'aucune couche n'est interposée entre les deux couches considérées.

Par « à base de » on entend au sens de l'invention que pour la composition de cette couche, les éléments réactifs oxygène, ou azote, ou les deux s'ils sont présents tous les deux, ne sont pas considérés et l'élément non réactif (par exemple le silicium ou le zinc) qui est indiqué comme constituant la base, est présent à plus de 85 % atomique du total des éléments non réactifs dans la couche. Cette expression inclut ainsi ce qu'il est courant de nommer dans la technique considérée du « dopage », alors que l'élément dopant, ou chaque élément dopant, peut être présent en quantité allant jusqu'à 10 % atomique, mais sans que le total de dopant ne dépasse 15 % atomique des éléments non-réactifs.

Dans une variante particulière, ledit revêtement antireflet situé sous ladite couche fonctionnelle et/ou ledit revêtement antireflet situé au-dessus ladite couche fonctionnelle ne comporte aucune couche à l'état métallique. En effet, il n'est pas souhaité qu'une telle couche puisse réagir, et en particulier s'oxyder, lors du traitement.

Dans une variante particulière, ledit revêtement antireflet situé sous ladite couche fonctionnelle et/ou ledit revêtement antireflet situé au-dessus ladite couche fonctionnelle ne comporte aucune couche absorbante ; Par ≪ couche absorbante >> au sens de la présente invention, il faut comprendre que la couche est un matériau présentant un coefficient k moyen, sur toute la plage de longueur d'onde du visible (de 380 nm à 780 nm), supérieur à 0,5 et présentant une résistivité électrique à l'état massif (telle que connue dans la littérature) qui est supérieure à 10⁻⁵ Ω.cm. En effet, il n'est pas souhaité qu'une telle couche puisse réagir, et en particulier s'oxyder, lors du traitement.

Il est d'autant plus surprenant d'atteindre les propriétés visées par l'invention pour ces deux variantes précédentes car des propriétés similaires sont parfois obtenues dans l'art antérieur avec ces deux variantes précédentes.

De préférence, ladite sous-couche diélectrique de nitrure à base de silicium Si₃N₄ ne comporte pas de zirconium.

De préférence par ailleurs, ladite sous-couche diélectrique de nitrure à base de silicium Si₃N₄ ne comporte pas d'oxygène.

Ladite sous-couche d'oxyde à base de zinc ZnO et/ou ladite surcouche d'oxyde à base de zinc ZnO est, de préférence, constituée d'oxyde de zinc ZnO dopé à l'aluminium, c'est-à-dire qu'elle ne comporte aucun autre élément que Zn, Al et a.

Dans une variante spécifique, ledit revêtement antireflet situé sous ladite couche fonctionnelle comporte en outre une sous-couche intermédiaire diélectrique située entre ladite sous-couche diélectrique de nitrure à base de silicium Si₃N₄ et ladite face, cette sous-couche intermédiaire diélectrique étant oxydée (c'est-à-dire comportant de l'oxygène) et comprenant de préférence un oxyde mixte de zinc et d'étain.

Dans une variante spécifique, ledit revêtement antireflet situé au-dessus de ladite couche fonctionnelle comporte en outre une surcouche intermédiaire diélectrique située entre ladite surcouche d'oxyde à base de zinc ZnO et ladite surcouche diélectrique, cette surcouche intermédiaire diélectrique étant oxydée et comprenant de préférence un oxyde de titane.

La présente invention se rapporte par ailleurs à un vitrage multiple comportant un matériau selon l'invention, et au moins un autre substrat, les substrats étant maintenus ensemble par une structure de châssis, ledit vitrage réalisant une séparation entre un espace extérieur et un espace intérieur, dans lequel au moins une lame de gaz intercalaire est disposée entre les deux substrats.

Chaque substrat peut être clair ou coloré. Un des substrats au moins notamment peut être en verre coloré dans la masse. Le choix du type de coloration va dépendre du niveau de transmission lumineuse et/ou de l'aspect colorimétrique recherchés pour le vitrage une fois sa fabrication achevée.

Un substrat du vitrage, notamment le substrat porteur de l'empilement peut être bombé et/ou trempé après le dépôt de l'empilement. Il est préférable dans une configuration de vitrage multiple que l'empilement soit disposé de manière à être tourné du côté de la lame de gaz intercalaire.

Le vitrage peut aussi être un triple vitrage constitué de trois feuilles de verre séparées deux par deux par une lame de gaz. Dans une structure en triple vitrage, le substrat porteur de l'empilement peut être en face 2 et/ou en face 5, lorsque l'on considère que le sens incident de la lumière solaire traverse les faces dans l'ordre croissant de leur numéro.

La présente invention se rapporte par ailleurs à un procédé d'obtention, ou de fabrication, d'un matériau comportant un substrat verrier revêtu sur une face d'un empilement de couches minces à propriétés de réflexion dans l'infrarouge et/ou dans le rayonnement solaire comportant au moins une couche fonctionnelle métallique, en particulier à base d'argent ou d'alliage métallique contenant de l'argent et deux revêtements antireflet, lesdits revêtements antireflet comportant chacun au moins une couche diélectrique, ladite couche fonctionnelle étant disposée entre les deux revêtements antireflet, ledit procédé comprenant les étapes suivantes, dans l'ordre :
- le dépôt sur une face dudit substrat d'un empilement de couches minces à propriétés de réflexion dans l'infrarouge et/ou dans le rayonnement solaire comportant au moins une couche fonctionnelle métallique, en particulier à base d'argent ou d'alliage métallique contenant de l'argent et au moins deux revêtements antireflet, afin de former un matériau selon l'invention, puis
- le traitement dudit empilement de couches minces à l'aide d'une source produisant un rayonnement et notamment un rayonnement infrarouge, afin de traiter l'empilement de couches minces en tant que tel.

Ledit traitement est, de préférence, opéré dans une atmosphère ne comprenant pas d'oxygène.

Ladite sous-couche d'oxyde à base de zinc ZnO est, de préférence, déposée à partir d'une cible céramique comprenant du ZnO et dans une atmosphère ne comportant pas d'oxygène ou comportant au plus 10,0 % d'oxygène.

Les détails et caractéristiques avantageuses de l'invention ressortent des exemples non limitatifs suivants, illustrés à l'aide des figures ci-jointes illustrant :
- [fig. 1] illustre une structure d'un empilement monocouche fonctionnelle selon l'invention, la couche fonctionnelle étant déposée directement sur une sous-couche d'oxyde à base de zinc ZnO et directement sous une sous-couche d'oxyde à base de zinc ZnO, l'empilement étant illustré pendant le traitement à l'aide d'une source produisant un rayonnement ;
- [fig. 2] illustre une structure d'un empilement bicouche fonctionnelle selon l'invention, chaque couche fonctionnelle étant déposée directement sur une sous-couche d'oxyde à base de zinc ZnO et directement sous une sous-couche d'oxyde à base de zinc ZnO, l'empilement étant illustré pendant le traitement à l'aide d'une source produisant un rayonnement ;
- [fig. 3] illustre un double vitrage incorporant un empilement selon l'invention ;
- [fig. 4] illustre un triple vitrage incorporant deux empilements selon l'invention ;
- [fig. 5] illustre la résistance par carré de certains exemples d'empilements de couches minces en fonction de l'épaisseur d'une sous-couche d'oxyde à base de zinc ZnO 129 et sans aucun traitement ;
- [fig. 6] illustre la résistance par carré des mêmes exemples qu'en figure 5, en fonction de l'épaisseur d'une sous-couche d'oxyde à base de zinc ZnO 129 et après un traitement thermique AHT ou après un traitement par laser ALT ;
- [fig. 7] le facteur solaire de certains exemples de vitrages en fonction de l'épaisseur d'une sous-couche d'oxyde à base de zinc ZnO 129 après un traitement par laser ;
- [fig. 8] illustre la résistance par carré de certains exemples d'empilements de couches minces en fonction de l'épaisseur de la sous-couche d'oxyde à base de zinc ZnO 129 et de ses conditions de dépôt (nature de l'atmosphère) sans aucun traitement thermique WHT ou après un traitement par laser ALT, et ;
- [fig. 9] illustre la résistance par carré ainsi que la résistance mécanique de certains exemples en fonction de l'épaisseur de la sous-couche d'oxyde à base de zinc ZnO 129, sans aucun traitement thermique (R, EBT100, EBT200, EBT300, EBT400) ou après un traitement par laser (LR, LEBT100, LEBT200, LEBT300, LEBT400).

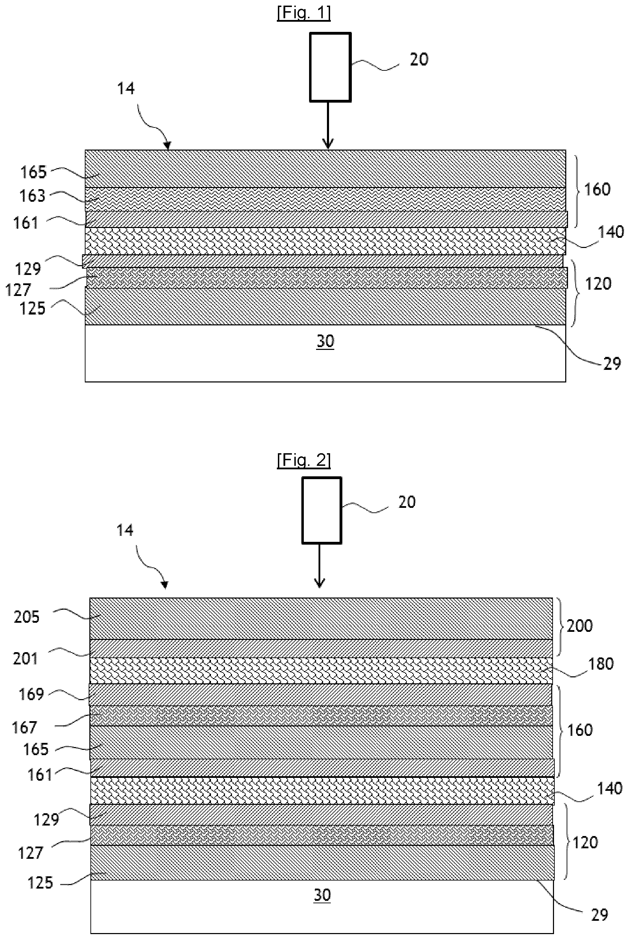

Dans les figures 1 à 4, les proportions entre les épaisseurs des différentes couches ou des différents éléments ne sont pas rigoureusement respectées afin de faciliter leur lecture.

La figure 1 illustre une structure d'un empilement 14 monocouche fonctionnelle selon l'invention déposé sur une face 29 d'un substrat 30 verrier, transparent, dans laquelle la couche fonctionnelle 140 unique, en particulier à base d'argent ou d'alliage métallique contenant de l'argent, est disposée entre deux revêtements antireflet, le revêtement antireflet 120 sous-jacent situé en dessous de la couche fonctionnelle 140 en direction du substrat 30 et le revêtement antireflet 160 sus-jacent disposé au-dessus de la couche fonctionnelle 140 à l'opposé du substrat 30.Ces deux revêtements antireflet 120, 160, comportent chacun au moins une couche diélectrique 121, 127, 129 ; 161, 163, 165. Sur cette figure 1 :
- d'une part le revêtement antireflet 120 situé sous et au contact de la couche fonctionnelle 140 comporte, en direction dudit substrat :
   - une sous-couche d'oxyde à base de zinc, ZnO, 129 qui est située sous et au contact de ladite couche fonctionnelle, avec une épaisseur physique de la sous-couche d'oxyde à base de zinc ZnO qui est comprise entre 0,3 et 5,0 nm, voire entre 0,3 et 4,4 nm, voire entre 1,0 et 3,0 nm, voire entre 1,5 et 2,4 nm ; et
   - une sous-couche diélectrique de nitrure à base de silicium, Si₃N₄, 127 qui est située sous et au contact de la sous-couche d'oxyde à base de zinc ZnO, respectivement 129, avec une épaisseur physique de la sous-couche de nitrure à base de silicium Si₃N₄ qui est comprise entre 10,0 et 50,0 nm, voire entre 22,0 et 45,0 nm, voire entre 35,0 et 45,0 nm ;
- d'autre part le revêtement antireflet 160 situé au-dessus et au contact de la couche fonctionnelle 140 comporte à l'opposé du substrat :
   - une surcouche d'oxyde à base de zinc, ZnO, 161, qui est située sur et au contact de la couche fonctionnelle, avec une épaisseur physique de la surcouche d'oxyde à base de zinc ZnO qui est comprise entre 2,0 et 10,0 nm, voire entre 2,0 et 8,0 nm, voire entre 2,5 et 5,4 nm ; et
   - une surcouche diélectrique 165 qui est située sur la surcouche d'oxyde à base de zinc ZnO, 161 et de préférence cette surcouche diélectrique est de nitrure à base de silicium ,Si₃N₄.

La figure 2 illustre une structure d'un empilement 14 bicouche fonctionnelle selon l'invention déposé sur une face 29 d'un substrat 30 verrier, transparent, dans laquelle les couches fonctionnelles 140, 180, en particulier à base d'argent ou d'alliage métallique contenant de l'argent, sont disposée entre deux revêtements antireflet, le revêtement antireflet 120 sous-jacent situé en dessous de la couche fonctionnelle 140 la plus proche de la face 29 du substrat 30, le revêtement antireflet 160 intermédiaire est située entre les deux couches fonctionnelles et le revêtement antireflet 200 sus-jacent disposé au-dessus de la couche fonctionnelle 180 la plus éloignée de la face 29 du substrat 30. Ces trois revêtements antireflet 120, 160, 200 comportent chacun au moins une couche diélectrique 127, 129 ; 161, 167, 169 ; 201, 205. Sur cette figure 2 :
- d'une part ledit revêtement antireflet situé sous et au contact de chaque couche fonctionnelle 140, 180 comporte, en direction dudit substrat :
   - une sous-couche d'oxyde à base de zinc, ZnO, 129, 169 qui est située sous et au contact de ladite couche fonctionnelle, avec une épaisseur physique de ladite sous-couche d'oxyde à base de zinc ZnO qui est comprise entre 0,3 et 5,0 nm, voire entre 0,3 et 4,4 nm, voire entre 1,0 et 3,0 nm, voire entre 1,5 et 2,4 nm ; et
   - une sous-couche diélectrique de nitrure à base de silicium, Si₃N₄, 127, 167, qui est située sous et au contact de ladite sous-couche d'oxyde à base de zinc ZnO, respectivement 129, 169, avec une épaisseur physique de ladite sous-couche de nitrure à base de silicium Si₃N₄ qui est comprise entre 10,0 et 50,0 nm, voire entre 22,0 et 45,0 nm, voire entre 35,0 et 45,0 nm ;
- d'autre part ledit revêtement antireflet situé au-dessus et au contact de chaque couche fonctionnelle 140, 180 comporte à l'opposé dudit substrat :
   - une surcouche d'oxyde à base de zinc, ZnO, 161, 201, qui est située sur et au contact de ladite couche fonctionnelle, avec une épaisseur physique de ladite surcouche d'oxyde à base de zinc ZnO qui est comprise entre 2,0 et 10,0 nm, voire entre 2,0 et 8,0 nm, voire entre 2,5 et 5,4 nm ; et
   - une surcouche diélectrique 205 qui est située sur ladite surcouche d'oxyde à base de zinc ZnO, 201 et de préférence cette surcouche diélectrique est de nitrure à base de silicium ,Si₃N₄.

La couche fonctionnelle 140 est située directement sur le revêtement antireflet 120 sous-jacent et directement sous le revêtement antireflet 160 sus-jacent : il n'y a pas de revêtement de sous-blocage situé entre le revêtement antireflet 120 sous-jacent et la couche fonctionnelle 140 ni de revêtement de sur-blocage située entre la couche fonctionnelle 140 et le revêtement antireflet 160. Il en est de préférence de même pour l'autre ou les autres couches fonctionnelles éventuellement présente(s) : chacune est, de préférence, au contact direct du revêtement antireflet situé directement dessous et du revêtement antireflet situé directement dessus.

Le revêtement antireflet 160 situé au-dessus de l'unique couche fonctionnelle métallique en figure 1 (ou qui est situé au-dessus de la couche fonctionnelle métallique la plus éloignée du substrat lorsqu'il y a plusieurs couches fonctionnelles métalliques) peut se terminer par une couche de protection terminale (non illustrée), appelée « overcoat » en anglais, qui est la couche de l'empilement qui est la plus éloignée de la face 29.

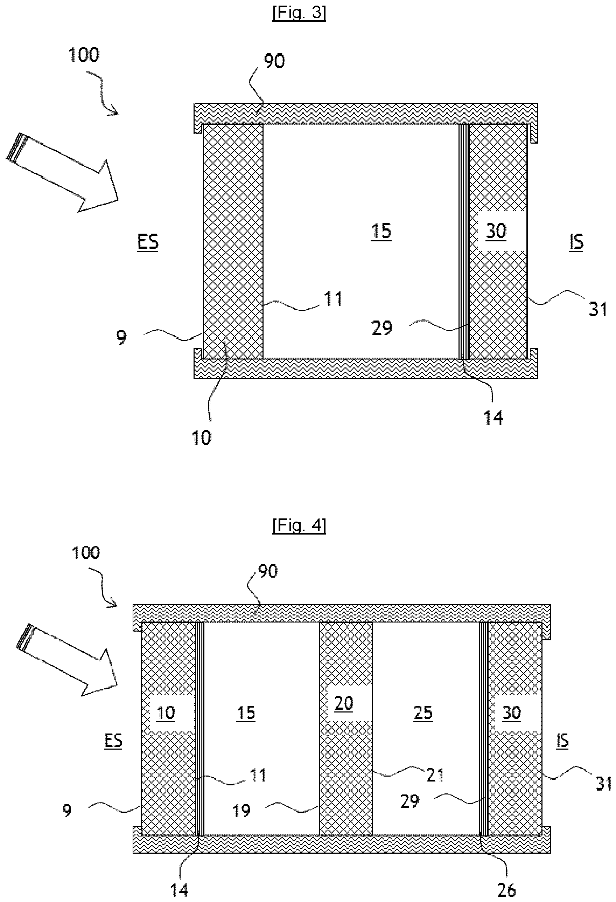

Un tel empilement de couches minces peut être utilisé dans un vitrage multiple 100 réalisant une séparation entre un espace extérieur ES et un espace intérieur IS ; ce vitrage peut présenter une structure :
- de double vitrage, comme illustré en figure 3 : ce vitrage est alors constitué de deux substrats 10, 30 qui sont maintenus ensemble par une structure de châssis 90 et qui sont séparés l'un de l'autre par une lame de gaz intercalaire 15 ; ou
- de triple vitrage, comme illustré en figure 4 : ce vitrage est alors constitué de trois substrats 10, 20, 30, séparée deux par deux par une lame de gaz intermédiaire 15, 25, le tout étant maintenu ensemble par une structure de châssis 90.

Dans les figures 3 et 4, le sens incident de la lumière solaire entrant dans le bâtiment est illustré par la double flèche, à gauche.

En figure 3, l'empilement 14 de couches minces peut être positionné en face 3 (sur la feuille la plus à l'intérieur du bâtiment en considérant le sens incident de la lumière solaire entrant dans le bâtiment et sur sa face tournée vers la lame de gaz), c'est-à-dire sur une face intérieure 29 du substrat 30 en contact avec la lame de gaz intercalaire 15, l'autre face 31 du substrat 30 étant en contact avec l'espace intérieur IS.

Toutefois, il peut aussi être envisagé que dans cette structure de double vitrage, l'un des substrats présente une structure feuilletée.

En figure 4, il y a deux empilements de couches minces, de préférence identiques :
- un empilement 14 de couches minces est positionné en face 2 (sur la feuille la plus à l'extérieur du bâtiment en considérant le sens incident de la lumière solaire entrant dans le bâtiment et sur sa face tournée vers la lame de gaz), c'est-à-dire sur une face intérieure 11 du substrat 10 en contact avec la lame de gaz intercalaire 15, l'autre face 9 du substrat 10 étant en contact avec l'espace extérieur ES ;
- et un empilement 26 de couches minces est positionné en face 5 (sur la feuille la plus à l'intérieur du bâtiment en considérant le sens incident de la lumière solaire entrant dans le bâtiment et sur sa face tournée vers la lame de gaz), c'est-à-dire sur une face intérieure 29 du substrat 30 en contact avec la lame de gaz intercalaire 25, l'autre face 31 du substrat 30 étant en contact avec l'espace intérieur IS.

Une première série d'exemples a été réalisée sur la base de la structure d'empilement illustrée en figure 1 avec, en partant de la surface 29, uniquement les couches suivantes, dans cet ordre :
- une sous-couche diélectrique de nitrure à base de silicium, Si₃N₄ 127 d'une épaisseur physique de 20 nm, déposée à partir d'une cible en silicium dopé à l'aluminium, à 92 % en poids de silicium et 8 % en poids d'aluminium dans une atmosphère à 45 % d'azote sur le total d'azote et d'argon et sous une pression de 1,5.10⁻³ mbar ;
- une sous-couche d'oxyde à base de zinc, ZnO 129, d'une épaisseur physique variable, variant de 1,0 nm à plus de 7,0 nm, déposée à partir d'une cible céramique constituée de 49 % atomique de zinc et 49 % atomique d'oxygène et dopée à l'aluminium à 2 %, dans une atmosphère d'argon et sous une pression de 2.10⁻³ mbar ;
- une couche fonctionnelle métallique 140 à base d'argent, et plus précisément ici en argent, d'une épaisseur physique de 10 nm, déposée à partir d'une cible métallique en argent, dans une atmosphère d'argon et sous une pression de 2.10⁻³ mbar ;
- une surcouche d'oxyde à base de zinc, ZnO 161, d'une épaisseur physique de 5 nm, déposée à partir d'une cible céramique constituée de 49 % atomique de zinc et 49 % atomique d'oxygène et dopée à l'aluminium à 2 %, dans une atmosphère d'argon et sous une pression de 2.10⁻³ mbar ;
- une surcouche diélectrique 165 de nitrure à base de silicium, Si₃N₄, d'une épaisseur physique de 20 nm, déposée à partir d'une cible en silicium dopé à l'aluminium, à 92 % en poids de silicium et 8 % en poids d'aluminium dans une atmosphère à 45 % d'azote sur le total d'azote et d'argon et sous une pression de 2.10⁻³ mbar.

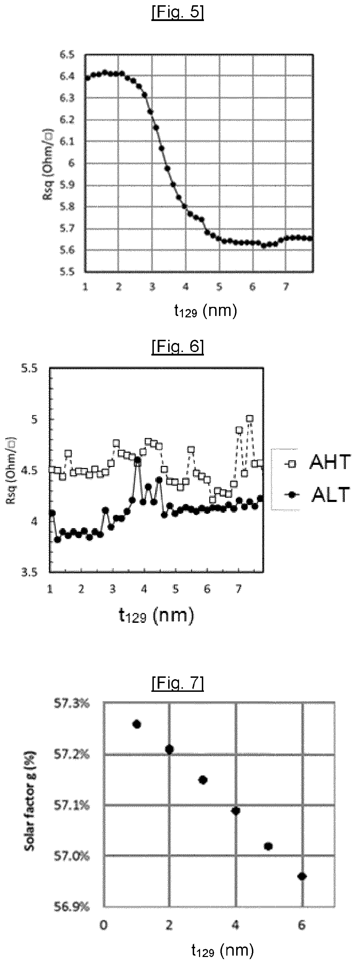

La figure 5 illustre en ordonnée la résistance par carré, Rsq, en ohms par carré des empilements ainsi déposés en fonction de l'épaisseur, t₁₂₉, en nanomètres de la sous-couche d'oxyde à base de zinc, ZnO 129 en abscisse, cette résistance par carrée étant mesurée immédiatement après le dépôt des empilements, c'est-à-dire sans aucun traitement thermique. Cette courbe montre qu'il y a, a priori, aucun intérêt à utiliser une sous-couche d'oxyde à base de zinc ZnO 129 présentant une épaisseur inférieure à 5 nm car la résistance par carré de l'empilement tend à être plus élevée dans cette gamme d'épaisseur.

La figure 6 illustre en ordonnée la résistance par carré, Rsq, en ohms par carré de ces empilements en fonction de l'épaisseur, t₁₂₉, en nanomètres de la sous-couche d'oxyde à base de zinc, ZnO 129 en abscisse, cette résistance par carrée étant mesurée après l'un ou l'autre de ces traitements :
- soit un traitement thermique de recuit, consistant en un chauffage à une température de 650 °C pendant 10 minutes puis un refroidissement en laissant simplement l'échantillon dans une ambiance à 20°C, afin de simuler une trempe ; les mesures sont illustrées par la courbe du haut, AHT ;
- soit un traitement de laser consistant ici en un défilement du substrat 30 à une vitesse de 4 m/min sous une ligne laser 20 de 0,08 mm de large, 11,6 mm de long et de puissance totale de 433 W avec la ligne laser orientée perpendiculairement à la face 29 et en direction de l'empilement 14, c'est-à-dire en disposant la ligne laser au-dessus de l'empilement, comme visible en figure 1 (la flèche noire droite illustrant l'orientation de la lumière émise) ; les mesures sont illustrées par la courbe du bas, ALT.

La comparaison entre la courbe en haut, AHT, et la courbe en bas, ALT, montre que, à l'exception d'un artéfact à 3,8 nm, la résistance par carré est encore plus faible après un traitement laser qu'après un traitement thermique de trempe, pour une épaisseur de sous-couche d'oxyde à base de zinc ZnO 129 entre 1,0 et 5,0 nm. Il y a même un plateau particulièrement favorable, avec une résistance par carré particulièrement faible, pour une épaisseur de sous-couche d'oxyde à base de zinc ZnO 129 entre 1,0 et 3,0 nm, voire entre 1,5 et 2,4 nm. L'amélioration est comprise entre 5 et 10 % par rapport au traitement thermique de trempe.

Une telle situation permet dans une première approche d'augmenter le facteur solaire à épaisseur de couche fonctionnelle constante, voire dans une seconde approche de diminuer l'épaisseur de la couche fonctionnelle pour augmenter encore plus le facteur solaire sans modifier la résistance par carrée précédemment obtenue.

Un contre-exemple a été réalisé sur la base de cette première série, avec les mêmes couches (même matériau, même épaisseur) 127, 129 de 5 nm, 140, 161 et 165, mais avec en outre l'insertion d'une couche de sur-blocage en NiCr (couche d'une épaisseur de 1,0 nm, déposée à partir d'une cible métallique à 80% en masse de Ni et 20 % en masse de Cr, dans une atmosphère d'argon et sous une pression de 2.10⁻³ mbar) entre la couche fonctionnelle métallique 140 et la surcouche d'oxyde à base de zinc 161. Avant tout traitement, la résistance par carré a été mesurée à 6,1 ohms/carré, soit plus de 10 % plus élevée que sans couche de sur-blocage.

Ce contre-exemple a subi le même traitement laser que les exemples précédents et sa résistance par carré a ensuite été mesurée à 5,1 ohms/carré.

La présence d'une couche de sur-blocage est ainsi défavorable à l'obtention d'une résistance par carré faible ; En outre, il a été constaté que ce contre-exemple présentait une absorption lumineuse résiduelle après traitement laser qui étaient trop haute et inacceptable pour les performances visées.

Pour confirmer cet effet, une seconde série d'exemples a été réalisée sur la base de la structure d'empilement illustrée en figure 1 avec, en partant de la surface 29, uniquement les couches suivantes, dans cet ordre :
- une sous-couche diélectrique de nitrure à base de silicium, Si₃N₄ 127 d'une épaisseur physique de 40 nm, déposée à partir d'une cible en silicium dopé à l'aluminium, à 92% en poids de silicium et 8 % en poids d'aluminium dans une atmosphère à 45 % d'azote sur le total d'azote et d'argon et sous une pression de 1,5.10⁻³ mbar ;
- une sous-couche d'oxyde à base de zinc ZnO 129, d'une épaisseur physique variable, variant de 1 nm à plus de 7 nm, déposée à partir d'une cible céramique constituée de 49 % atomique de zinc et 49 % atomique d'oxygène et dopée à l'aluminium à 2 % , dans une atmosphère d'argon et sous une pression de 2.10⁻³ mbar ;
- une couche fonctionnelle métallique 140 à base d'argent, et même précisément ici en argent, d'une épaisseur physique de 10 nm, déposée à partir d'une cible métallique en argent, dans une atmosphère d'argon et sous une pression de 2.10⁻³ mbar ;
- une surcouche d'oxyde à base de zinc ZnO 161, d'une épaisseur physique de 5 nm, déposée à partir d'une cible céramique constituée de 49 % atomique de zinc et 49 % atomique d'oxygène et dopée à l'aluminium à 2 %, dans une atmosphère d'argon et sous une pression de 2.10⁻³ mbar ;
- une surcouche diélectrique 163 comprenant du dioxyde de titane TiOz, d'une épaisseur physique de 2 nm, déposée à partir d'une cible en titane dans une atmosphère à 23 % d'oxygène sur le total d'oxygène et d'argon et sous une pression de 2.10⁻³ mbar ;
- une surcouche diélectrique 165 de nitrure à base de silicium, Si₃N₄, d'une épaisseur physique de 30 nm, déposée à partir d'une cible en silicium dopé à l'aluminium, à 92% en poids de silicium et 8 % en poids d'aluminium dans une atmosphère à 45 % d'azote sur le total d'azote et d'argon et sous une pression de 2.10⁻³ mbar.

Tous ces exemples ont fait l'objet du même traitement par laser que précédemment, puis ont été monté en triple vitrage dans une structure du type de celle illustrée en figure 4. Il s'agit pour ces exemples d'une configuration : 4-16 (Ar 90%)-4-16 (Ar 90%)-4, c'est-à-dire qu'elle est constituée de trois feuilles de verre transparent de 4 mm, réalisant chacune un substrat 10, 20, 30, séparées deux par deux par une lame de gaz intermédiaire 15, 25 à 90 % d'argon et 10 % d'air d'une épaisseur chacune de 16 mm, le tout étant maintenus ensemble par une structure de châssis 90.

Les deux substrats 10, 30 extérieurs de ce triple vitrage sont revêtus, chacun, sur sa face intérieure 11, 29 tournée vers la lame de gaz intermédiaire 15, 25, d'un revêtement isolant 14, 26 constitué de l'empilement monocouche fonctionnelle décrit ci-avant : les empilements monocouche fonctionnelle sont ainsi en faces dites « face 2 » et « face 5 »).

Le substrat 20 central de ce triple vitrage, celui dont les deux faces 19, 21 sont en contact respectivement avec les lames de gaz intermédiaire 15 et 25, n'est revêtu d'aucun revêtement sur aucune de ces faces.

La figure 7 illustre l'évolution en ordonnée du facteur solaire, g, en pourcent, en fonction de l'épaisseur, t₁₂₉, en nanomètres de la sous-couche d'oxyde à base de zinc ZnO 129 en abscisse, ce facteur solaire étant mesurée immédiatement après le traitement laser des deux substrats 10, 30, puis leur intégration pour former le triple vitrage. Le facteur solaire est ainsi amélioré lorsque la sous-couche d'oxyde à base de zinc ZnO 129 est entre 0,03 et 5,0 nm. Le facteur solaire est particulièrement favorable pour une épaisseur de cette sous-couche d'oxyde à base de zinc ZnO 129 entre 1,0 et 3,0 nm, voire entre 1,5 et 2,4 nm.

Il a été mesuré que pour une épaisseur de sous-couche d'oxyde à base de zinc ZnO 129 de 5,0 nm et une épaisseur de la couche fonctionnelle 140 de 10,0 nm pour les deux empilements 14, 26, la résistance par carré est de 3,78 ohms par carré et le facteur solaire du triple vitrage de 57,02 %

Il a été constaté avec surprise que pour une épaisseur de sous-couche d'oxyde à base de zinc ZnO 129 de 1,0 nm et une épaisseur de la couche fonctionnelle 140 de 10,0 nm pour les deux empilements 14, 26, la résistance par carré est descendue à 3,59 ohms par carré et le facteur solaire du triple vitrage est monté à 57,26 %.

En baissant l'épaisseur de la couche fonctionnelle 140 des deux empilements 14, 26 de 10,0 à 9,6 ohms par carré et en conservant l'épaisseur de sous-couche d'oxyde à base de zinc ZnO 129 à 1,0 nm, il a été ainsi possible de réaliser deux empilements présentant sensiblement la même résistance par carré qu'avec 5,0 nm pour la sous-couche d'oxyde à base de zinc ZnO 129 et 10,0 nm pour la couche fonctionnelle 140 (3,80 ohms par carré). Toutefois, pour une résistance par carré conservée, il a alors été constaté que le triple vitrage présentait un facteur solaire bien supérieur, à 58,23 %.

Une troisième série d'exemples a ensuite été réalisée sur la base de la première série d'exemple en modifiant les conditions de dépôt de la sous-couche d'oxyde à base de zinc ZnO 129 : l'atmosphère de dépôt de cette couche a été testé avec :
- 0% d'oxygène (et 100 % d'argon) ; les mesures sont illustrées par des ronds ;
- 5 % d'oxygène (et 95 % d'argon) ; les mesures sont illustrées par des triangles ;
- et 10 % d'oxygène (et 90 % d'argon) ; les mesures sont illustrées par des carrés.

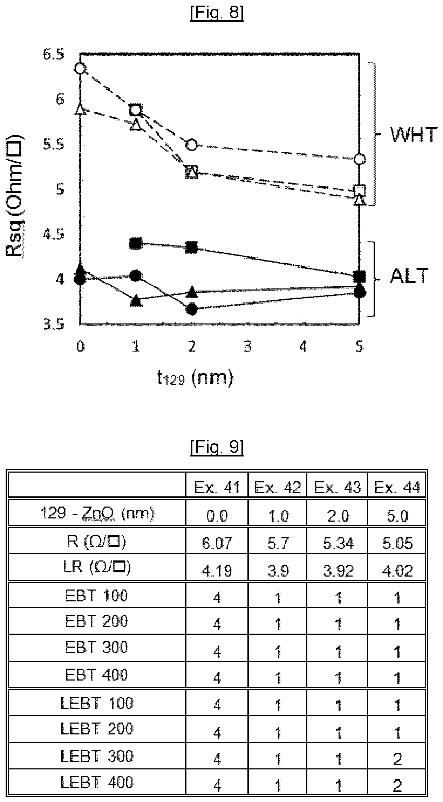

La figure 8 illustre en ordonnée la résistance par carré Rsq, en ohms par carré de ces empilements en fonction de l'épaisseur en nanomètres de la sous-couche d'oxyde à base de zinc ZnO 129, t₁₂₉, en abscisse, cette résistance par carrée étant mesurée après l'un ou l'autre de ces traitements :
- sans traitement thermique, WHT ; les mesures sont illustrées par des ronds, triangles ou carrés vides ;
- soit le même traitement laser que la première série, ALT par la ligne laser 20 visible en figure 2 ; les mesures sont illustrées par des ronds, triangles ou carrés pleins.

La résistance par carré peut être moins élevée qu'escomptée lorsqu'il y a beaucoup d'oxygène dans l'atmosphère de dépôt de la sous-couche d'oxyde à base de zinc, ZnO 129 ; en particulier lorsque la teneur est très supérieure à 10 %.

Une quatrième série d'exemples a ensuite été réalisée sur la base de la première série d'exemple en conservant les conditions de dépôt de la sous-couche d'oxyde à base de zinc ZnO 129 les plus favorables de la troisième série d'exemples (atmosphère de dépôt à 5 % d'oxygène et 95 % d'argon) et en faisant varier l'épaisseur de cette sous-couche d'oxyde à base de zinc ZnO 129.

Le tableau de la figure 9 présente en première ligne les données essentielles pour cette série d'exemple pas de sous-couche d'oxyde à base de zinc ZnO 129 (ex. 41), ou une sous-couche d'oxyde à base de zinc ZnO 129 de 1,0 nm (ex. 42), ou de 2,0 nm (ex. 43) ou de 5,0 nm (ex. 44).

Les deux lignes suivantes du tableau de la figure 9 présentent :
- la résistance par carré de l'empilement complet avant tout traitement thermique : R, en ohms par carré, et
- la résistance par carré de l'empilement complet après traitement laser : LR, en ohms par carré ; ce traitement étant identique à celui opéré précédemment.

Les deux séries de quatre lignes suivantes présentent les résultats au test de résistance mécanique appelé « Erichsen Brush Test » et consistant à appliquer une brosse avec des pois en nylon sur l'empilement immergé dans l'eau pendant 100, 200, 300 ou 400 tours et de noter :
- la résistance mécanique à ce test avant tout traitement thermique : EBT ;
- la résistance mécanique à ce test après traitement laser : LEBT ; ce traitement étant identique à celui opéré précédemment.

Lors de ce test, la notation est attribuée de la façon suivante :
- note 1 lorsqu'il n'y a aucune marque sur l'échantillon ;
- note 2 lorsqu'il y a de fines rayures sur l'échantillon ;
- note 3 lorsqu' il y a de larges rayures sur l'échantillon ou de larges défauts ponctuels ;
- note 4 lorsqu' il y a une délamination de l'empilement.

L'exemple 41 présente une résistance par carré relativement élevée, tant sans traitement thermique qu'après traitement laser et une très mauvaise résistance au test EBT.

Les exemples 42 à 44 présentent tous une bonne résistance mécanique au test EBT, tant sans traitement thermique qu'après traitement laser et le gain (diminution) de résistance par carré est important avec les exemples 42, 43 et 44 (gain respectif de 32 %, 27 % et 20 %) dont la sous-couche d'oxyde à base de zinc ZnO 129 est déposée directement sur la sous-couche diélectrique comprenant du nitrure de silicium Si₃N₄ 127.

Dans une variante, il est possible que ledit revêtement antireflet 120 situé sous la couche fonctionnelle 140 comporte en outre une sous-couche intermédiaire diélectrique125 située entre la sous-couche diélectrique de nitrure à base de silicium, Si₃N₄ 127 et la face 29, cette sous-couche intermédiaire diélectrique 125 étant oxydée et comprenant de préférence un oxyde mixte de zinc et d'étain.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Matériau comprenant un substrat (30) verrier revêtu sur une face (29) d'un empilement de couches minces (14) à propriétés de réflexion dans l'infrarouge et/ou dans le rayonnement solaire comportant au moins une couche fonctionnelle métallique (140), en particulier à base d'argent ou d'alliage métallique contenant de l'argent et au moins deux revêtements antireflet (120, 160), lesdits revêtements antireflet comportant chacun au moins une couche diélectrique (127, 165), ladite couche fonctionnelle (140) étant disposée entre les deux revêtements antireflet (120, 160), ***caractérisé en ce que*** ledit revêtement antireflet (120) situé sous ladite couche fonctionnelle (140) en direction dudit substrat (30) comporte :
- une sous-couche d'oxyde à base de zinc, ZnO (129) qui est située sous et au contact de ladite couche fonctionnelle (140), avec une épaisseur physique de ladite sous-couche à base d'oxyde de zinc ZnO (129) qui est comprise entre 0,3 et 5,0 nm, voire entre 0,3 et 4,4 nm, voire entre 0,3 et 2,9 nm, voire entre 0,5 et 2,4 nm ; et
- une sous-couche diélectrique de nitrure à base de silicium, Si₃N₄ (127) qui est située sous et au contact de ladite sous-couche d'oxyde à base de zinc, ZnO (129), avec une épaisseur physique de ladite sous-couche diélectrique de nitrure à base de silicium Si₃N₄ (127) qui est comprise entre 10,0 et 50,0 nm, voire entre 22,0 et 45,0 nm, voire entre 35,0 et 45,0 nm ;
***et en ce que*** ledit revêtement antireflet (160) situé au-dessus ladite couche fonctionnelle (140) à l'opposé dudit substrat (30) comporte :
- une surcouche d'oxyde à base de zinc, ZnO (161) qui est située sur et au contact de ladite couche fonctionnelle (140), avec une épaisseur physique de ladite surcouche d'oxyde à base de zinc, ZnO (161) qui est comprise entre 2,0 et 10,0 nm, voire entre 2,0 et 8,0 nm, voire entre 2,5 et 5,4 nm ; et
- une surcouche diélectrique (165) qui est située sur ladite surcouche d'oxyde à base de zinc, ZnO (161) et, de préférence une surcouche diélectrique de nitrure à base de silicium, Si₃N₄.

2. Matériau selon la revendication 1, dans lequel ladite couche fonctionnelle métallique (140), ou chaque fonctionnelle métallique, présente une épaisseur physique qui est comprise entre 8,0 et 22,0 nm, voire entre 9,0 et 16,0 nm, voire entre 9,5 et 12,4 nm.

3. Matériau selon la revendication 1 ou 2, dans lequel ledit revêtement antireflet (120) situé sous ladite couche fonctionnelle métallique (140) et/ou ledit revêtement antireflet (160) situé au-dessus ladite couche fonctionnelle métallique (140) ne comporte aucune couche à l'état métallique.

4. Matériau selon une quelconque des revendications 1 à 3, dans lequel ladite sous-couche diélectrique de nitrure à base de silicium, Si₃N₄ (127) ne comporte pas de zirconium.

5. Matériau selon une quelconque des revendications 1 à 4, dans lequel ladite sous-couche diélectrique de nitrure à base de silicium, Si₃N₄ (127) ne comporte pas d'oxygène.

6. Matériau selon une quelconque des revendications 1 à 5, dans lequel ladite sous-couche d'oxyde à base de zinc, ZnO (129) et/ou ladite surcouche d'oxyde à base de zinc, ZnO (161) est constituée d'oxyde de zinc ZnO dopé à l'aluminium.

7. Matériau selon une quelconque des revendications 1 à 6, dans lequel ledit revêtement antireflet (120) situé sous ladite couche fonctionnelle (140) comporte en outre une sous-couche intermédiaire diélectrique (121) située entre ladite sous-couche diélectrique de nitrure à base de silicium, Si₃N₄ (127) et ladite face (29), cette sous-couche intermédiaire diélectrique (121) étant oxydée et comprenant de préférence un oxyde mixte de zinc et d'étain.

8. Matériau selon une quelconque des revendications 1 à 7, dans lequel ledit revêtement antireflet (160) situé au-dessus de ladite couche fonctionnelle (140) comporte en outre une surcouche intermédiaire diélectrique (163) située entre ladite surcouche d'oxyde à base de zinc, ZnO (161) et ladite surcouche diélectrique (165), cette surcouche intermédiaire diélectrique (163) étant oxydée et comprenant de préférence un oxyde de titane.

9. Vitrage multiple comportant un matériau selon l'une quelconque des revendications 1 à 8, et au moins un autre substrat (10), les substrats (10, 30) étant maintenus ensemble par une structure de châssis (90), ledit vitrage réalisant une séparation entre un espace extérieur (ES) et un espace intérieur (IS), dans lequel au moins une lame de gaz intercalaire (15) est disposée entre les deux substrats.

10. Procédé d'obtention d'un matériau comportant un substrat (30) verrier revêtu sur une face (29) d'un empilement de couches minces (14) à propriétés de réflexion dans l'infrarouge et/ou dans le rayonnement solaire comportant au moins une couche fonctionnelle métallique (140), en particulier à base d'argent ou d'alliage métallique contenant de l'argent et deux revêtements antireflet (120, 160), lesdits revêtements antireflet comportant chacun au moins une couche diélectrique (127, 165), ladite couche fonctionnelle (140) étant disposée entre les deux revêtements antireflet (120, 160), ledit procédé comprenant les étapes suivantes, dans l'ordre :
- le dépôt sur une face (29) dudit substrat (30) d'un empilement de couches minces (14) à propriétés de réflexion dans l'infrarouge et/ou dans le rayonnement solaire comportant au moins une couche fonctionnelle métallique (140), en particulier à base d'argent ou d'alliage métallique contenant de l'argent et au moins deux revêtements antireflet (120, 160), afin de former un matériau selon l'une quelconque des revendications 1 à 7, puis
- le traitement dudit empilement de couches minces (14) à l'aide d'une source produisant un rayonnement et notamment un rayonnement infrarouge.

11. Procédé selon la revendication 10, dans lequel ledit traitement est opéré dans une atmosphère ne comprenant pas d'oxygène.

12. Procédé selon la revendication 10 ou 11, dans lequel ladite sous-couche d'oxyde à base de zinc, ZnO (129) est déposée à partir d'une cible céramique comprenant du ZnO et dans une atmosphère ne comportant pas d'oxygène ou comportant au plus 10,0 % d'oxygène.

## Patentansprüche

1. Material, umfassend ein Glassubstrat (30), das auf einer Fläche (29) mit einer Stapelung von Dünnschichten (14) mit Reflexionseigenschaften in dem Infrarot- und/oder in dem Sonnenstrahlungsbereich beschichtet ist, die mindestens eine funktionelle Metallschicht (140), insbesondere auf Basis von Silber oder einer Metalllegierung, die Silber enthält, und mindestens zwei Antireflexbeschichtungen (120, 160) aufweist, wobei die Antireflexbeschichtungen jeweils mindestens eine dielektrische Schicht (127, 165) aufweisen, wobei die funktionelle Schicht (140) zwischen den zwei Antireflexbeschichtungen (120, 160) angeordnet ist,
**dadurch gekennzeichnet, dass** die Antireflexbeschichtung (120), die unter der funktionellen Schicht (140) gelegen ist, in Richtung des Substrats (30) aufweist:
- eine Unterschicht aus Oxid auf Basis von Zink, ZnO, (129), die unter und in Kontakt mit der funktionellen Schicht (140) gelegen ist, mit einer physikalischen Dicke der Unterschicht auf Basis von Zinkoxid ZnO (129), die zwischen 0,3 und 5,0 nm, oder sogar zwischen 0,3 und 4,4 nm, oder sogar zwischen 0,3 und 2,9 nm, oder sogar zwischen 0,5 und 2,4 nm liegt; und
- eine dielektrische Unterschicht aus Nitrid auf Basis von Silizium, Si₃N₄, (127), die unter und in Kontakt mit der Unterschicht aus Oxid auf Basis von Zink, ZnO, (129) gelegen ist, mit einer physikalischen Dicke der dielektrischen Unterschicht aus Nitrid auf Basis von Silizium Si₃N₄ (127), die zwischen 10,0 und 50,0 nm oder sogar zwischen 22,0 und 45,0 nm oder sogar zwischen 35,0 und 45,0 nm liegt;
***und dass*** die Antireflexbeschichtung (160), die über der funktionellen Schicht (140) gegenüber dem Substrat (30) gelegen ist, aufweist:
- eine Überschicht aus Oxid auf Basis von Zink, ZnO, (161), die auf und in Kontakt mit der funktionellen Schicht (140) gelegen ist, mit einer physikalischen Dicke der Überschicht aus Oxid auf Basis von Zink, ZnO, (161), die zwischen 2,0 und 10,0 nm, oder sogar zwischen 2,0 und 8,0 nm, oder sogar zwischen 2,5 und 5,4 nm liegt; und
- eine dielektrische Überschicht (165), die auf der Überschicht aus Oxid auf Basis von Zink, ZnO, (161) gelegen ist, und vorzugsweise eine dielektrische Überschicht aus Nitrid auf Basis von Silizium, Si₃N₄.

2. Material nach Anspruch 1, wobei die funktionelle Metallschicht (140) oder jede metallische Funktion eine physikalische Dicke vorweist, die zwischen 8,0 und 22,0 nm oder sogar zwischen 9,0 und 16,0 nm oder sogar zwischen 9,5 und 12,4 nm liegt.

3. Material nach Anspruch 1 oder 2, wobei die Antireflexbeschichtung (120), die unter der funktionellen Metallschicht (140) gelegen ist, und/oder die Antireflexbeschichtung (160), die über der funktionellen Metallschicht (140) gelegen ist, überhaupt keine Schicht in dem metallischen Zustand aufweist.

4. Material nach einem der Ansprüche 1 bis 3, wobei die dielektrische Unterschicht aus Nitrid auf Basis von Silizium, Si₃N₄, (127) kein Zirkonium aufweist.

5. Material nach einem der Ansprüche 1 bis 4, wobei die dielektrische Unterschicht aus Nitrid auf Basis von Silizium, Si₃N₄, (127) keinen Sauerstoff aufweist.

6. Material nach einem der Ansprüche 1 bis 5, wobei die Unterschicht aus Oxid auf Basis von Zink, ZnO, (129) und/oder die Überschicht aus Oxid auf Basis von Zink, ZnO, (161) aus mit Aluminium dotiertem Zinkoxid ZnO besteht.

7. Material nach einem der Ansprüche 1 bis 6, wobei die Antireflexbeschichtung (120), die unter der funktionellen Schicht (140) gelegen ist, ferner eine dielektrische Zwischenunterschicht (121) umfasst, die zwischen der dielektrischen Unterschicht aus Nitrid auf Basis von Silizium, Si₃N₄, (127) und der Fläche (29) gelegen ist, wobei diese dielektrische Zwischenunterschicht (121) oxidiert ist und vorzugsweise ein Mischoxid aus Zink und aus Zinn umfasst.

8. Material nach einem der Ansprüche 1 bis 7, wobei die Antireflexbeschichtung (160), die über der funktionellen Schicht (140) gelegen ist, ferner eine dielektrische Zwischenüberschicht (163) aufweist, die zwischen der Überschicht aus Oxid auf Basis von Zink, ZnO, (161) und der dielektrischen Überschicht (165) gelegen ist, wobei diese dielektrische Zwischenüberschicht (163) oxidiert ist und vorzugsweise ein Titanoxid umfasst.

9. Mehrfachverglasung, die mindestens ein Material nach einem der Ansprüche 1 bis 8 und mindestens ein anderes Substrat (10) aufweist, wobei die Substrate (10, 30) durch eine Rahmenstruktur (90) zusammengehalten werden, wobei die Verglasung eine Trennung zwischen einem Außenraum (ES) und einem Innenraum (IS) herstellt, wobei mindestens ein Zwischenlagengasspalt (15) zwischen den zwei Substraten angeordnet ist.

10. Verfahren zum Gewinnen eines Materials, das ein Glassubstrat (30) aufweist, das auf einer Fläche (29) mit einer Stapelung von Dünnschichten (14) mit Reflexionseigenschaften in dem Infrarot- und/oder in dem Sonnenstrahlungsbereich beschichtet ist, die mindestens eine funktionelle Metallschicht (140), insbesondere auf Basis von Silber oder einer Metalllegierung, die Silber enthält, und zwei Antireflexbeschichtungen (120, 160) aufweist, wobei die Antireflexbeschichtungen jeweils mindestens eine dielektrische Schicht (127, 165) aufweisen, wobei die funktionelle Schicht (140) zwischen den zwei Antireflexbeschichtungen (120, 160) angeordnet ist, das Verfahren umfassend die folgenden Schritte der Reihe nach:
- Abscheiden auf eine Fläche (29) des Substrats (30) einer Stapelung von Dünnschichten (14) mit Reflexionseigenschaften in dem Infrarot- und/oder in dem Sonnenstrahlungsbereich, die mindestens eine funktionelle Metallschicht (140), insbesondere auf Basis von Silber oder einer Metalllegierung, die Silber enthält, und mindestens zwei Antireflexbeschichtungen (120, 160) aufweist, um ein Material nach einem der Ansprüche 1 bis 7 auszubilden, dann
- Behandeln der Stapelung von Dünnschichten (14) mithilfe einer Quelle, die eine Strahlung und insbesondere eine Infrarotstrahlung produziert.

11. Verfahren nach Anspruch 10, wobei das Behandeln in einer Atmosphäre durchgeführt wird, umfassend keinen Sauerstoff.

12. Verfahren nach Anspruch 10 oder 11, wobei die Unterschicht aus Oxid auf Basis von Zink, ZnO, (129) von einem Keramikziel, umfassend ZnO und in einer Atmosphäre, die keinen Sauerstoff aufweist oder höchstens 10,0 % Sauerstoff aufweist, abgeschieden wird.

## Claims

1. A material comprising a glass substrate (30) coated on one face (29) with a stack of thin layers (14) with properties of reflection in the infrared and/or in solar radiation comprising at least one metallic functional layer (140), in particular based on silver or metal alloy containing silver and at least two anti reflective coatings (120, 160), said anti reflective coatings each comprising at least one dielectric layer (127, 165), said functional layer (140) being arranged between the two antireflective coatings (120, 160), ***characterized in that*** said anti reflective coating (120) located beneath said functional layer (140) in the direction of said substrate (30) comprises:
- a sublayer of zinc-based oxide, ZnO (129) that is located beneath and in contact with said functional layer (140), with a physical thickness of said sublayer based on zinc oxide ZnO (129) that is between 0.3 and 5.0 nm, or between 0.3 and 4.4 nm, or between 0.3 and 2.9 nm, or between 0.5 and 2.4 nm; and
- a dielectric sublayer of silicon-based nitride, Si₃N₄ (127) that is located beneath and in contact with said sublayer of zinc-based oxide, ZnO (129), with a physical thickness of said dielectric sublayer of silicon-based nitride Si₃N₄ (127) that is between 10.0 and 50.0 nm, or between 22.0 and 45.0 nm, or between 35.0 and 45.0 nm;
***and in that*** said antireflective coating (160) located above said functional layer (140) opposite said substrate (30) comprises:
- an overlay of zinc-based oxide, ZnO (161) that is located on top of and in contact with said functional layer (140), with a physical thickness of said overlay of zinc-based oxide, ZnO (161) that is between 2.0 and 10.0 nm, or between 2.0 and 8.0 nm, or between 2.5 and 5.4 nm; and
- a dielectric overlay (165) that is located on said overlay of zinc-based oxide, ZnO (161) and, preferably a dielectric overlay of silicon-based nitride, Si₃N₄.

2. The material as claimed in claim 1, in which said metallic functional layer (140), or each metallic functional layer, has a physical thickness that is between 8.0 and 22.0 nm, or between 9.0 and 16.0 nm, or between 9.5 and 12.4 nm.

3. The material as claimed in claim 1 or 2, in which said anti reflective coating (120) located beneath said metallic functional layer (140) and/or said anti reflective coating (160) located above said metallic functional layer (140) does not comprise any layer in the metallic state.

4. The material as claimed in any one of claims 1 to 3, in which said dielectric sublayer of silicon-based nitride, Si₃N₄ (127) does not comprise zirconium.

5. The material as claimed in any one of claims 1 to 4, in which said dielectric sublayer of silicon-based nitride, Si₃N₄ (127) does not comprise oxygen.

6. The material as claimed in any one of claims 1 to 5, in which said sublayer of zinc-based oxide, ZnO (129) and/or said overlay of zinc-based oxide, ZnO (161) consists of zinc oxide ZnO doped with aluminum.

7. The material as claimed in any one of claims 1 to 6, in which said anti reflective coating (120) located beneath said functional layer (140) further comprises a dielectric intermediate sublayer (121) located between said dielectric sublayer of silicon-based nitride, Si₃N₄ (127) and said face (29), this dielectric intermediate sublayer (121) being oxidized and preferably comprising a mixed oxide of zinc and tin.

8. The material as claimed in any one of claims 1 to 7, in which said anti reflective coating (160) located above said functional layer (140) further comprises a dielectric intermediate overlay (163) located between said overlay of zinc-based oxide, ZnO (161) and said dielectric overlay (165), this dielectric intermediate overlay (163) being oxidized and preferably comprising a titanium oxide.

9. A multiple glazing comprising a material as claimed in any one of claims 1 to 8, and at least one other substrate (10), the substrates (10, 30) being held together by a frame structure (90), said glazing providing separation between an exterior space (ES) and an interior space (IS), in which at least one interposed gas gap (15) is arranged between the two substrates.

10. A method of producing a material comprising a glass substrate (30) coated on one face (29) with a stack of thin layers (14) with properties of reflection in the infrared and/or in solar radiation comprising at least one metallic functional layer (140), in particular based on silver or metal alloy containing silver and two antireflective coatings (120, 160), said anti reflective coatings each comprising at least one dielectric layer (127, 165), said functional layer (140) being arranged between the two antireflective coatings (120, 160), said method comprising the following steps, in this order:
- depositing, on a face (29) of said substrate (30), a stack of thin layers (14) with properties of reflection in the infrared and/or in solar radiation comprising at least one metallic functional layer (140), in particular based on silver or metal alloy containing silver and at least two anti reflective coatings (120, 160), in order to form a material as claimed in any one of claims 1 to 7, and then
- treating said stack of thin layers (14) using a source producing radiation and in particular infrared radiation.

11. The method as claimed in claim 10, in which said treatment is carried out in an atmosphere not comprising oxygen.

12. The method as claimed in claim 10 or 11, in which said sublayer of zinc-based oxide, ZnO (129) is deposited from a ceramic target comprising ZnO, in an atmosphere not comprising oxygen or comprising at most 10.0% oxygen.
